# EUROPEAN PATENT APPLICATION

(11) **EP 3 236 608 A1**
(43) Date of publication of application: **25.10.2017**
(21) Application number: 15868871.3
(22) Date of filing: 20.03.2015
(51) Int. Cl.: H04L 5/00

(54) **DOWNLINK DATA TRANSMISSION METHOD AND DEVICE, AND DOWNLINK DATA ACQUISITION DEVICE**

(30) Priority: 19.12.2014 CN 201410805497
(71) Applicant: ZTE Corporation, Shenzhen, Guangdong 518057 (CN)
(72) Inventor: YANG, Weiwei, Shenzhen Guangdong 518057 (CN); DAI, Bo, Shenzhen Guangdong 518057 (CN); LIANG, Chunli, Shenzhen Guangdong 518057 (CN)
(74) Representative: Novagraaf Technologies
(86) International application number: PCT/CN2015/074798
(87) International publication number: WO 2016/095354

(57) **Abstract**

At least some embodiments of disclosure include a method and device for transmitting downlink data, and a device for acquiring downlink data. In the method, DCI corresponding to downlink data on a first carrier is configured in a preset manner; and the downlink data on the first carrier is transmitted according to the DCI corresponding to the downlink data on the first carrier. According to the technical solution provided by at least some embodiments of the disclosure, DCI corresponding to downlink data on a FDD uplink carrier is effectively configured in flexible duplex, complexity of a terminal is not increased, and performance of the DCI is ensured.

## Description

### Technical Field

The disclosure relates to communication field, and in particular to a method and device for transmitting downlink data, and a device for acquiring downlink data.

### Background

A traditional cellular communication system is usually designed aiming at voice services. An assumed condition of each voice service is that change of service load is limited (the service load is relatively static or changes semi-statically), and ratios of uplink and downlink services are symmetric. For example, a Frequency Division Duplex (FDD) system uses pairs of uplink and downlink frequency spectrums. However, such a relatively static uplink and downlink frequency resource allocation in a Long Term Evolution (LTE) system does not adapt well to change of services.

With a rapid development of Mobile Broadband (MBB) services in recent years, requirement of people on wireless communications is increasingly high, and a characteristic of more and more application services is that requirement on downlink services is higher than requirement on uplink services. And in some specific scenarios, the requirement on uplink services is higher than the requirement on downlink services. The ratios of uplink and downlink services of some typical applications are provided in Table 1. For example, the requirement on downlink services usually takes the lead in online video, software downlink, and web browsing, and the requirement on uplink services takes the lead in social networking, Point-to-Point (P2P) sharing and other services.

**Table 1**

| Type of service | Uplink/downlink rate ratio (average) |
|---|---|
| Online video | 1:37 |
| Software downlink | 1:22 |
| Web browsing | 1:9 |
| Social networking | 4:1 |
| E-mail | 1:4 |
| P2P video | 3:1 |

For FDD, because pairs of frequency spectrum resources are needed, utilization of resources is not very flexible, and in consideration of uplink and downlink asymmetry of existing services, most services give priority to downlink, a use efficiency of uplink frequency spectrums is low. And most of the time there are a great amount of uplink frequency spectrum resources which are not used fully. For this reason, a duplex manner called flexible duplex emerges at the right moment. In other words, a part of flexible sub-frames is defined in a frame structure, and these flexible sub-frames can dynamically perform uplink and downlink sub-frames switching. For example, there will be downlink data transmission on an FDD uplink carrier.

Since downlink data needs to be transmitted on the FDD uplink carrier, a technical problem to be solved in the flexible duplex is to determine a manner of configuring Downlink Control Information (DCI) corresponding to the downlink data.

### Summary

At least some embodiments of the disclosure include a method and device for transmitting downlink data, and a device for acquiring downlink data, so as to at least partially solve a problem that if downlink data needs to be transmitted on an FDD uplink carrier, a manner of configuring DCI corresponding to the downlink data cannot be determined.

In an embodiment of the disclosure, a method for transmitting downlink data is provided, which includes that: configuring Downlink Control Information (DCI) corresponding to downlink data on a first carrier in a preset manner, wherein the preset manner is one of the followings: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier; when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier; transmitting the downlink data on the first carrier according to the DCI corresponding to the downlink data on the first carrier.

In one embodiment, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, distinguishing, according to the DCI corresponding to the downlink data on the first carrier, between the DCI corresponding to the downlink data on the first carrier and the DCI corresponding to the uplink data on the first carrier, or between the DCI corresponding to the downlink data on the first carrier and the DCI corresponding to the downlink data on the second carrier.

In one embodiment, distinguishing according to the DCI corresponding to the downlink data on the first carrier is distinguishing according to at least one of the following: at least one existing control domain in the DCI corresponding to the downlink data on the first carrier and at least one control domain newly-added in the DCI corresponding to the downlink data on the first carrier.

In one embodiment, distinguishing according to the control domain newly-added in the DCI corresponding to the downlink data on the first carrier is at least adding the following control domains: a carrier indication domain and a format indication domain.

In one embodiment, at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier refers to that when at least one of a number of information bits in a DCI format corresponding to the downlink data on the first carrier is less than a number of information bits in a DCI format corresponding to the uplink data on the first carrier and the number of information bits in a DCI format corresponding to the downlink data on the first carrier is less than a number of information bits in a DCI format corresponding to the downlink data on the second carrier, adding 0 in the DCI format corresponding to the downlink data on the first carrier until at least one of the number of information bits in the DCI format corresponding to the downlink data on the first carrier is the same as the number of information bits in the DCI format corresponding to the uplink data on the first carrier and the number of information bits in the DCI format corresponding to the downlink data on the first carrier is the same as the number of information bits in the DCI format corresponding to the downlink data on the second carrier.

In one embodiment, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in different search spaces.

In one embodiment, the different search spaces refer to search spaces which are respectively defined by using a continuous mode or a maximum interval mode.

In one embodiment, the downlink data on the first carrier is transmitted by using a structure of Physical Uplink Shared Channel (PUSCH) or a structure of Physical Downlink Shared Channel (PDSCH).

In one embodiment, the first carrier is a Frequency Division Duplex (FDD) uplink carrier or a carrier on an unauthorized spectrum in Carrier Aggregation (CA).

In one embodiment, the second carrier is an FDD downlink carrier corresponding to a FDD uplink carrier or a carrier on an authorized spectrum in CA.

In another embodiment of the disclosure, a device for transmitting downlink data is provided, which includes: a configuring component to configure Downlink Control Information (DCI) corresponding to downlink data on a first carrier in a preset manner, wherein the preset manner is one of the followings: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier; when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier; a transmitting component to transmit the downlink data on the first carrier according to the DCI corresponding to the downlink data on the first carrier.

In one embodiment, the configuring component is further configured to, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, distinguish, according to the DCI corresponding to the downlink data on the first carrier, between the DCI corresponding to the downlink data on the first carrier and the DCI corresponding to the uplink data on the first carrier, or between the DCI corresponding to the downlink data on the first carrier and the DCI corresponding to the downlink data on the second carrier.

In one embodiment, distinguishing according to the DCI corresponding to the downlink data on the first carrier is distinguishing according to at least one of the following: at least one existing control domain in the DCI corresponding to the downlink data on the first carrier and at least one control domain newly-added in the DCI corresponding to the downlink data on the first carrier.

In one embodiment, distinguishing according to the control domain newly-added in the DCI corresponding to the downlink data on the first carrier is at least adding the following control domains: a carrier indication domain and a format indication domain.

In one embodiment, at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier refers to that when at least one of a number of information bits in a DCI format corresponding to the downlink data on the first carrier is less than a number of information bits in a DCI format corresponding to the uplink data on the first carrier and the number of information bits in a DCI format corresponding to the downlink data on the first carrier is less than a number of information bits in a DCI format corresponding to the downlink data on the second carrier, adding 0 in the DCI format corresponding to the downlink data on the first carrier until at least one of the number of information bits in the DCI format corresponding to the downlink data on the first carrier is the same as the number of information bits in the DCI format corresponding to the uplink data on the first carrier and the number of information bits in the DCI format corresponding to the downlink data on the first carrier is the same as the number of information bits in the DCI format corresponding to the downlink data on the second carrier.

In one embodiment, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in different search spaces.

In one embodiment, the different search spaces refer to search spaces which are respectively defined by using a continuous mode or a maximum interval mode.

In one embodiment, the downlink data on the first carrier is transmitted by using a structure of Physical Uplink Shared Channel (PUSCH) or a structure of Physical Downlink Shared Channel (PDSCH).

In one embodiment, the first carrier is a Frequency Division Duplex (FDD) uplink carrier or a carrier on an unauthorized spectrum in Carrier Aggregation (CA).

In one embodiment, the second carrier is an FDD downlink carrier corresponding to the FDD uplink carrier or a carrier on an authorized spectrum in CA.

In another embodiment of the disclosure, a device for acquiring downlink data is provided, which includes: a receiving component to receive Downlink Control Information (DCI) from a base station, wherein the DCI is configured by the base station for downlink data on a first carrier in a preset manner, and the preset manner is one of the followings: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier; when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier; an obtaining component to obtain the downlink data on the first carrier according to the DCI corresponding to the downlink data on the first carrier.

According to at least some embodiments of the disclosure, DCI corresponding to downlink data on a first carrier is configured in a preset manner, in which the preset manner is one of the followings: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier; when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier; and the downlink data on the first carrier is transmitted according to the DCI corresponding to the downlink data on the first carrier. In such a manner, the problem that if the downlink data needs to be transmitted on the FDD uplink carrier, the manner of configuring the DCI corresponding to the downlink data cannot be determined is solved, and then the DCI corresponding to the downlink data on the FDD uplink carrier is effectively configured in flexible duplex, complexity of the terminal is not increased, and performance of the DCI is ensured.

### Brief Description of the Drawings

The accompanying drawings described here are used for providing a deeper understanding of the disclosure, and constitute a part of the application; schematic embodiments of the disclosure and description thereof are used for illustrating the disclosure and not intended to form an improper limit to the disclosure. In the accompanying drawings:
Fig. 1 is a flowchart of a method for transmitting downlink data according to an embodiment of the disclosure.
Fig. 2 is a schematic diagram that DCI corresponding to downlink data on an FDD uplink carrier and DCI corresponding to uplink data on the FDD uplink carrier are transmitted on the same sub-frame according to an example embodiment of the disclosure.
Fig. 3 is a schematic diagram that DCI corresponding to downlink data on an FDD uplink carrier and DCI corresponding to downlink data on an FDD downlink carrier are transmitted on the same sub-frame according to an example embodiment of the disclosure.
Fig. 4 is a schematic diagram that DCI corresponding to downlink data on an FDD uplink carrier, DCI corresponding to downlink data on an FDD downlink spectrum and DCI corresponding to uplink data on an FDD uplink carrier are transmitted on the same sub-frame according to an example embodiment of the disclosure.
Fig. 5 is a schematic diagram of configuring DCI of SCell downlink data according to an example embodiment of the disclosure.
Fig. 6 is a structural block diagram of a device for transmitting downlink data according to an embodiment of the disclosure.
Fig. 7 is a structural block diagram of a device for acquiring downlink data according to an embodiment of the disclosure.

### Detailed Description

The disclosure is elaborated below with reference to the accompanying drawings and embodiments. Note that, embodiments of the disclosure and characteristics in the embodiments are combined under the condition of no conflicts.

In a existing LTE system, a Physical Downlink Control Channel (PDCCH) or evolved PDCCH (ePDCCH) is used for carrying DCI, in which the DCI may include, but is not limited to, at least one of the followings: uplink scheduling information, downlink scheduling information and uplink power control information.

There are several formats of the DCI as follows:
(1) DCI format 0;
(2) DCI format 1;
(3) DCI format 1A;
(4) DCI format 1B;
(5) DCI format 1C;
(6) DCI format 1D;
(7) DCI format 2;
(8) DCI format 2A;
(9) DCI format 2B;
(10) DCI format 2C;
(11) DCI format 2D;
(12) DCI format 3;
(13) DCI format 3A;
(14) DCI format 4;
in which, the DCI format 0/4 is used for indicating a scheduling of uplink data on a PUSCH, the DCI format 1, the DCI format 1A, the DCI format 1B, the DCI format 1C, the DCI format 1 D, the DCI format 2, the DCI format 2A, the DCI format 2B, the DCI format 2C and the DCI format 2D are used for indicating a scheduling of downlink data on a PDSCH, and the DCI format 3 and the DCI format 3A are used for indicating different modes of power control signaling of a Physical Uplink Control Channel (PUCCH) and the PUSCH.

A physical resource transmitted on the PDCCH takes a Control Channel Element (CCE) as a unit; a size of a CCE is 9 Resource Groups (REG), namely 36 Resource Elements (RE). A PDCCH may occupy 1, 2, 4, or 8 CCEs. A search space is defined aiming at each aggregation level, in which the search space includes: a common search space and a User Equipment (UE) specific search space. The common search space carries common information related to a system information block, an immediate access response and paging. The UE specific search space carries uplink and downlink scheduling authorization information of UE. When receiving the DCI, the UE detects the common search spaces whose aggregation levels are 4 and 8 respectively and the UE specific search spaces whose aggregation levels are 1, 2, 4 and 8 respectively, in which the common search space and the UE specific search space is overlapped. The specific number of detections and the corresponding search spaces are shown in Table 2.

**Table 2**

| Type | Aggregation level | Size of search space | Candidate set |
|---|---|---|---|
| Proprietary search spaces of UE | 1 | 6 | 6 |
| | 2 | 12 | 6 |
| | 4 | 8 | 2 |
| | 8 | 16 | 2 |
| Public search space | 4 | 16 | 4 |
| | 8 | 16 | 2 |

The UE is semi-statically set as one of the following transmission modes through high-level signaling to receive PDSCH data according to the indication of the PDCCH of the UE specific search spaces:
(1) mode 1: single-antenna port, port 0;
(2) mode 2: transmission diversity;
(3) mode 3: open-loop spatial multiplexing;
(4) mode 4: closed-loop spatial multiplexing;
(5) mode 5: multiuser Multi-Input Multi-Output (MIMO);
(6) mode 6: closed-loop RANK=1 precoding;
(7) mode 7: single-antenna port; port 5;
(8) mode 8: double-layer transmission mode; port 7 and port 8;
(9) mode 9: transmission of 8 layers at most; ports 7-14; and
(10) mode 10: transmission of 8 layers at most; ports 7-14;

If the UE is configured by the high level to adopt Cyclic Redundancy Check (CRC) scrambled by a Cell Radio Network Temporary Identifier (C-RNTI) to perform PDCCH decoding, the UE should decode the PDCCH and the related PDSCH according to the corresponding combination defined in Table 3. Table 3 is a table of corresponding relationship among downlink transmission mode, DCI format, search space and transmission scheme; as shown in Table 3,

**Table 3**

| Downlink transmission mode | DCI format | Search space | Transmission mode of corresponding PDSCH |
|---|---|---|---|
| Mode 1 | DCI format 1A | Common and UE specific defined by C-RNTI | Single-antenna port, port 0 |
| | DCI format 1 | UE specific defined by C-RNTI | Single-antenna port, port 0 |
| Mode 2 | DCI format 1A | Common and UE specific defined by C-RNTI | Transmission diversity |
| | DCI format 1 | UE specific defined by C-RNTI | Transmission diversity |
| Mode 3 | DCI format 1A | Common and UE specific defined by C-RNTI | Transmission diversity |
| | DCI format 2A | UE specific defined by C-RNTI | Open-loop spatial multiplexing or transmission diversity |
| Mode 4 | DCI format 1A | Common and UE specific defined by C-RNTI | Transmission diversity |
| | DCI format 2 | UE specific defined by C-RNTI | Closed-loop spatial multiplexing or transmission diversity |
| Mode 5 | DCI format 1A | Common and UE specific defined by C-RNTI | Transmission diversity |
| | DCI format 1D | UE specific defined by C-RNTI | Multiuser MIMO |
| Mode 6 | DCI format 1A | Common and UE specific defined by C-RNTI | Transmission diversity |
| | DCI format 1B | UE specific defined by C-RNTI | Single-layer closed-loop spatial multiplexing |
| Mode 7 | DCI format 1A | Common and UE specific defined by C-RNTI | If the number of antenna ports of PBCH is 1, single-antenna port, and port 0; or else, transmission diversity |
| | DCI format 1 | UE specific defined by C-RNTI | Single-antenna port, and port 5 |
| Mode 8 | DCI format 1A | Common and UE specific defined by C-RNTI | If the number of antenna ports of PBCH is 1, single-antenna port, and port 0; or else, transmission diversity |
| | DCI format 2B | UE specific defined by C-RNTI | Double-layer transmission mode, ports 7 and 8; or single-antenna port, port 7 or 8 |
| Mode 9 | DCI format 1A | Common and UE specific defined by C-RNTI | For a Non-MBSFN sub-frame, if the number of antenna ports of PBCH is 1, |
| | | | single-antenna port, and port 0; or else, transmission diversity; for an MBSFN sub-frame, single-antenna port, and port 7 |
| | DCI format 2C | UE specific defined by C-RNTI | Transmission of 8 layers at most, ports 7-14; or, single-antenna port, port 7 or 8 |
| Mode 10 | DCI format 1A | Common and UE specific defined by C-RNTI | For the Non-MBSFN sub-frame, if the number of antenna ports of PBCH is 1, single-antenna port, and port 0; or else, transmission diversity; for the MBSFN sub-frame, single-antenna port, and port 7 |
| | DCI format 2D | UE specific defined by C-RNTI | Transmission of 8 layers at most, ports 7-14; or, single-antenna port, port 7 or 8 |

If the UE is configured by the high level to adopt the CRC scrambled by the C-RNTI to perform PDCCH decoding, the UE should decode the PDCCH and all the related PUSCHs according to the corresponding combination defined in Table 4. Table 4 is a table of corresponding relationship among uplink transmission mode, DCI format, search space and transmission scheme; as shown in Table 4,

**Table 4**

| UE uplink transmission mode | DCI format | Search space | Transmission scheme of PUSCH corresponding to PDCCH |
|---|---|---|---|
| Mode 1 | DCI format 0 | Common and UE specific defined by C-RNTI | Single-antenna port, port 10 |
| Mode 2 | DCI format 0 | Common and UE specific defined by C-RNTI | Single-antenna port, port 10 |
| | DCI format 4 | UE specific defined by C-RNTI | Closed-loop spatial multiplexing |

The most significant character of the LTE-A system relative to the LTE system is that: a CA technology is introduced in the LTE-A system. In other words, the bandwidth of the LTE system is aggregated to obtain greater bandwidth. In the system with the CA technology introduced, the carrier aggregated is called a Component Carrier (CC) or a Serving Cell (SC). At the same time, a concept of Primary Component Carrier/Cell (PCC/PCell) and Secondary Component Carrier/Cell (SCC/SCell) is presented. The system performing CA may at least include a primary SC and a secondary SC, in which the primary SC is always in an activated state, and it is specified that the PUCCH performs transmission on the PCell.

The existing CA technology is applied to one of the following scenarios:
(1) aggregation of an FDD SC;
(2) aggregation of a Time Division Duplex (TDD) SC; and
(3) aggregation of the TDD SC and the FDD SC.

Moreover, in a future version, aggregation of the carriers on an unauthorized spectrum and aggregation of the carriers on an authorized spectrum will be taken into consideration.

Note that, the method for configuring the DCI provided in the present embodiment is also applied to configuration of control information corresponding to uplink and downlink data on a carrier on an unauthorized spectrum in CA.

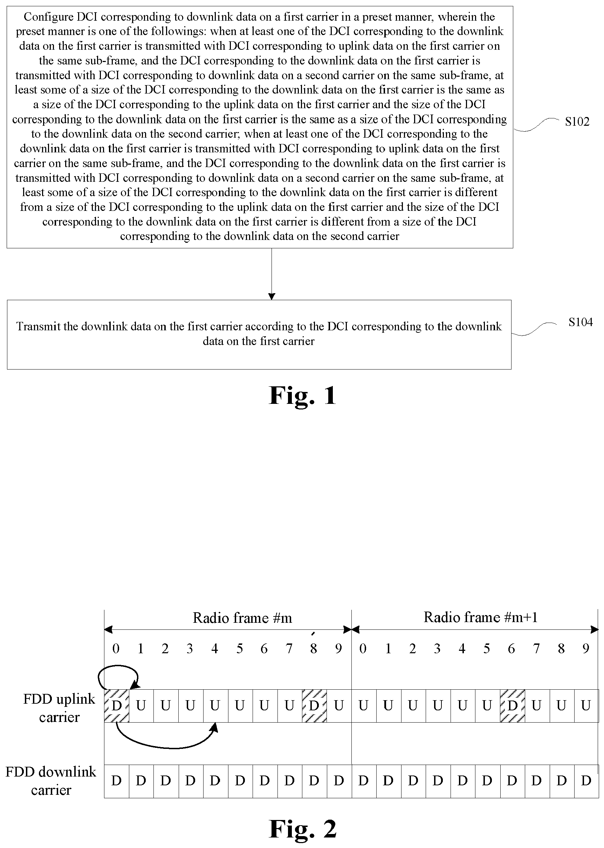

Fig. 1 is a flowchart of a method for transmitting downlink data according to an embodiment of the disclosure. As shown in Fig. 1, the method for transmitting downlink data includes the following processing steps:
At step S102: DCI corresponding to downlink data on a first carrier is configured in a preset manner; and
At step S104: the downlink data on the first carrier is transmitted according to the DCI corresponding to the downlink data on the first carrier.

In some situations, if the downlink data needs to be transmitted on an FDD uplink carrier, the manner of configuring the DCI corresponding to the downlink data cannot be determined. By using the method shown in Fig. 1, that is, DCI corresponding to downlink data on a first carrier is configured in a preset manner; and the downlink data on the first carrier is transmitted according to the DCI corresponding to the downlink data on the first carrier, the problem that if the downlink data needs to be transmitted on the FDD uplink carrier, the manner of configuring the DCI corresponding to the downlink data cannot be determined is solved, and then the DCI corresponding to the downlink data on the FDD uplink carrier is effectively configured in flexible duplex, complexity of the terminal is not increased, and performance of the DCI is ensured.

In an example implementation process, the downlink data on the first carrier is transmitted by using a structure of PUSCH or a structure of PDSCH.

In an example implementation process, the first carrier is an FDD uplink carrier or a carrier on the unauthorized spectrum in CA.

The preset manner is one of the followings:
manner 1: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier; and
manner 2: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier.

In an example implementation process, the second carrier is an FDD downlink carrier corresponding to a FDD uplink carrier or a carrier on the authorized spectrum in CA.

In one embodiment, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier in the manner 1, the base station distinguishes, according to the DCI corresponding to the downlink data on the first carrier, between the DCI corresponding to the downlink data on the first carrier and the DCI corresponding to the uplink data on the first carrier, or between the DCI corresponding to the downlink data on the first carrier and the DCI corresponding to the downlink data on the second carrier.

In an example implementation process, distinguishing according to the DCI corresponding to the downlink data on the first carrier is distinguishing according to at least one of the following: at least one existing control domain in the DCI corresponding to the downlink data on the first carrier and at least one control domain newly-added in the DCI corresponding to the downlink data on the first carrier.

In an example implementation process, distinguishing according to the control domain newly-added in the DCI corresponding to the downlink data on the first carrier is at least adding the following control domains: a carrier indication domain and a format indication domain.

In one embodiment, at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier refers to that when at least one of a number of information bits in a DCI format corresponding to the downlink data on the first carrier is less than a number of information bits in a DCI format corresponding to the uplink data on the first carrier and the number of information bits in a DCI format corresponding to the downlink data on the first carrier is less than a number of information bits in a DCI format corresponding to the downlink data on the second carrier, adding 0 in the DCI format corresponding to the downlink data on the first carrier until at least one of the number of information bits in the DCI format corresponding to the downlink data on the first carrier is the same as the number of information bits in the DCI format corresponding to the uplink data on the first carrier and the number of information bits in the DCI format corresponding to the downlink data on the first carrier is the same as the number of information bits in the DCI format corresponding to the downlink data on the second carrier.

In one embodiment, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in different search spaces. The different search spaces refer to search spaces which are respectively defined by using a continuous mode or a maximum interval mode.

The example implementation process is further described below in combination with the following application scenarios.

### Scenario 1

Fig. 2 is a schematic diagram that DCI corresponding to downlink data on an FDD uplink carrier and DCI corresponding to uplink data on the FDD uplink carrier are transmitted on the same sub-frame according to an example embodiment of the disclosure. As shown in Fig. 2, when the DCI corresponding to the downlink data on the FDD uplink carrier and the DCI corresponding to the uplink data on the FDD uplink carrier are transmitted on the same sub-frame, a radio frame is #m, and a sub-frame is #0, both the DCI corresponding to the downlink data on a downlink sub-frame #0 on the FDD uplink carrier and the DCI corresponding to the uplink data on an uplink sub-frame #4 on the FDD uplink carrier are transmitted on the same sub-frame #0. The scenario further includes the following example embodiments.

### A first example embodiment

In the example embodiment, the size of the DCI corresponding to the downlink data on the FDD uplink carrier is configured in one of the following two manners:
manner 1: the size of the DCI format corresponding to the downlink data on the FDD uplink carrier is the same as the size of the DCI format corresponding to the uplink data on the FDD uplink carrier; and
manner 2: the size of the DCI format corresponding to the downlink data on the FDD uplink carrier is different from the size of the DCI format corresponding to the uplink data on the FDD uplink carrier.

The DCI format corresponding to the downlink data on the FDD uplink carrier and the DCI format corresponding to the downlink data on the FDD downlink carrier are in the same search space.

For the manner 1, distinguishing between the DCI format corresponding to the downlink data on the FDD uplink carrier and the DCI format corresponding to the uplink data on the FDD uplink carrier is performed by configuring the carrier indication domain in the DCI format.

For the manner 1, distinguishing between the DCI format corresponding to the downlink data on the FDD uplink carrier and the DCI format corresponding to the uplink data on the FDD uplink carrier is performed by adding the format indication domain in the DCI format.

For the manner 1, an expression of the size of the DCI format corresponding to the downlink data on the FDD uplink carrier being the same as the size of the DCI format corresponding to the uplink data on the FDD uplink carrier refers to that:
if the number of information bits in the DCI format corresponding to the downlink data on the FDD uplink carrier is less than the number of information bits in the DCI format corresponding to the uplink data on the FDD uplink carrier, 0 is added in the DCI format corresponding to the downlink data on the FDD uplink carrier until the size of the DCI format corresponding to the downlink data on the FDD uplink carrier is the same as the size of the DCI format corresponding to the uplink data on the FDD uplink carrier; if the number of information bits in the DCI format corresponding to the downlink data on the FDD uplink carrier is greater than the number of information bits in the DCI format corresponding to the uplink data on the FDD uplink carrier, 0 is added in the DCI format corresponding to the uplink data on the FDD uplink carrier until the size of the DCI format corresponding to the uplink data on the FDD uplink carrier is the same as the size of the DCI format corresponding to the downlink data on the FDD uplink carrier.

The DCI format corresponding to the downlink data on the FDD uplink carrier and the DCI format corresponding to the uplink data on the FDD uplink carrier are in the same search space.

For the manner 2, because the size of the DCI format corresponding to the downlink data on the FDD uplink carrier is different from the size of the DCI format corresponding to the uplink data on the FDD uplink carrier, the terminal can distinguish the DCI corresponding to the uplink and downlink data through blind detection.

The DCI format corresponding to the downlink data on the FDD uplink carrier and the DCI format corresponding to the uplink data on the FDD uplink carrier are in either the same search space or different search spaces. And the different search spaces are search spaces which are respectively defined by using the continuous mode or the maximum interval mode.

### A second example embodiment

In the example embodiment, the downlink data on the FDD uplink carrier is transmitted in form of PUSCH and the corresponding transmission mode is single-antenna transmission. The corresponding DCI format is DCI format X, and the DCI format corresponding to the uplink data on the FDD uplink carrier is DCI format 0.

In an example implementation process, the size of the DCI corresponding to the downlink data on the FDD uplink carrier is configured in one of the following two manners:
manner 1: the size of the DCI format X corresponding to the downlink data on the FDD uplink carrier is the same as the size of the DCI format 0 corresponding to the uplink data on the FDD uplink carrier; and
manner 2: the size of the DCI format X corresponding to the downlink data on the FDD uplink carrier is different from the size of the DCI format 0 corresponding to the uplink data on the FDD uplink carrier.

For the manner 1, distinguishing between the DCI format X corresponding to the downlink data on the FDD uplink carrier and the DCI format 0 corresponding to the uplink data on the FDD uplink carrier is performed by configuring a carrier indication control domain in the DCI format X.

For the manner 1, distinguishing between the DCI format X corresponding to the downlink data on the FDD uplink carrier and the DCI format 0 corresponding to the uplink data on the FDD uplink carrier is performed by adding the format indication domain in the DCI format X, and the length of the format indication domain is 1 bit. When the bit is 1, the format indication domain is used for indicating the DCI format X, and when the bit is 0, the format indication domain is used for indicating the DCI format 0. Or, when the bit is 1, the format indication domain is used for indicating the DCI format 0, and when the bit is 0, the format indication domain is used for indicating the DCI format X.

For the manner 1, an expression of the size of the DCI format X being the same as the size of the DCI format 0 refers to that:
if the number of information bits in the DCI format X is less than that in the DCI format 0, 0 is added in the DCI format X until the size of the DCI format X is the same as the size of the DCI format 0; if the number of information bits in the DCI format X is greater than that in the DCI format 0, 0 is added in the DCI format 0 until the size of the DCI format 0 is the same as the size of the DCI format X. The DCI format 0 and the DCI format X are in the same search space.

For the manner 2, because the size of the DCI format 0 is different from the size of the DCI format X, the terminal distinguishes through blind detection. The DCI format 0 and the DCI format X are in either the same search space or different search spaces. The different search spaces are search spaces which are respectively defined by using the continuous mode or the maximum interval mode.

For the DCI format X, at least one of the following control domains is included: carrier indication, frequency hopping indication, resource allocation and frequency hopping resource allocation, modulating and coding mechanism, Demodulation Reference Signal (DM RS) cyclic shift and OCC index, new data indication, SRS request, reference allocation indication, number of HARQ processes, redundancy version, transmission power control of PUCCH, and downlink allocation index.

### A third example embodiment

In the example embodiment, the downlink data on the FDD uplink carrier is transmitted in form of PUSCH and the corresponding transmission mode is multi-antenna transmission; the corresponding DCI format is DCI format Y, and the DCI format corresponding to the uplink data on the FDD uplink carrier is DCI format 4.

In an example implementation process, the size of the DCI corresponding to the downlink data on the FDD uplink carrier is configured in one of the following two manners:
manner 1: the size of the DCI format Y corresponding to the downlink data on the FDD uplink carrier is the same as the size of the DCI format 4 corresponding to the uplink data on the FDD uplink carrier; and
manner 2: the size of the DCI format Y corresponding to the downlink data on the FDD uplink carrier is different from the size of the DCI format 4 corresponding to the uplink data on the FDD uplink carrier.

For the manner 1, distinguishing between the DCI format Y corresponding to the downlink data on the FDD uplink carrier and the DCI format 4 corresponding to the uplink data on the FDD uplink carrier is performed by configuring the carrier indication control domain in the DCI format Y.

For the manner 1, distinguishing between the DCI format Y corresponding to the downlink data on the FDD uplink carrier and the DCI format 4 corresponding to the uplink data on the FDD uplink carrier is performed by adding the format indication domain in the DCI format Y, in which the length of the format indication domain is 1 bit. When the bit is 1, the format indication domain is used for indicating the DCI format Y, and when the bit is 0, the format indication domain is used for indicating the DCI format 4; or, when the bit is 1, the format indication domain is used for indicating the DCI format 4, and when the bit is 0, the format indication domain is used for indicating the DCI format Y.

For the manner 1, an expression of the size of the DCI format Y being the same as the size of the DCI format 4 refers to that:
if the number of information bits in the DCI format Y is less than that in the DCI format 4, 0 is added in the DCI format Y until the size of the DCI format Y is the same as the size of the DCI format 4; if the number of information bits in the DCI format Y is greater than that in the DCI format 4, 0 is added in the DCI format 4 until the size of the DCI format 4 is the same as the size of the DCI format Y. The DCI format 4 and the DCI format Y are in the same search space.

For the manner 2, because the size of the DCI format 4 is different from the size of the DCI format Y, the terminal distinguishes through blind detection. The DCI format 4 and the DCI format Y are in either the same search space or different search spaces. The different search spaces are search spaces which are respectively defined by using the continuous mode or the maximum interval mode.

For the DCI format Y, at least one of the following control domains is included: carrier indication, resource allocation, DM RS cyclic shift and OCC index, SRS request, resource allocation type, modulation and coding corresponding to transmission block 1, new data indication corresponding to transmission block 1, redundancy version corresponding to transmission block 1, modulation and coding corresponding to transmission block 2, new data indication corresponding to transmission block 2, redundancy version corresponding to transmission block 2, number of Hybrid Automatic Repeat Request (HARQ) processes, transmission power control of PUCCH, downlink allocation index and antenna port indication.

### A fourth example embodiment

As shown in Fig. 2, the terminal detects the DCI format 0 on the sub-frame #0, and then determines that the FDD uplink carrier sub-frame #4 is the uplink sub-frame according to the DCI format 0 and the existing scheduling or HARQ timing.

### Scenario 2

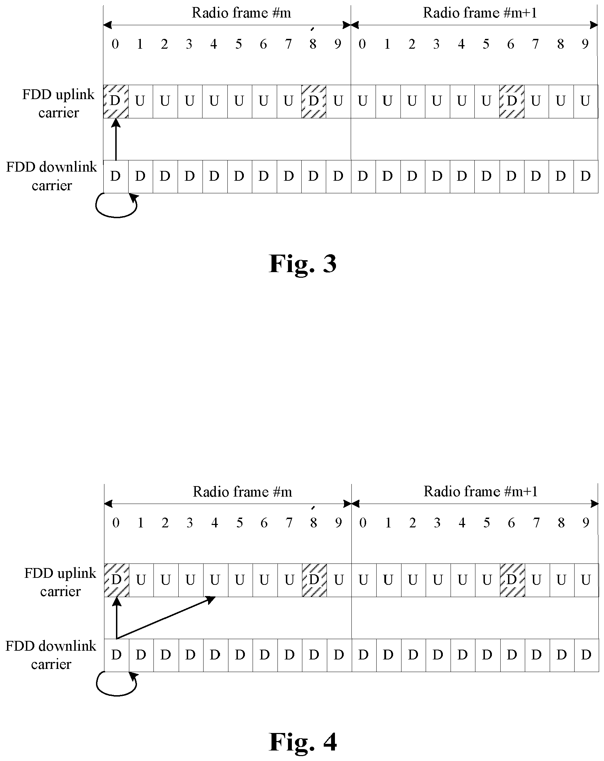

Fig. 3 is a schematic diagram that DCI corresponding to downlink data on an FDD uplink carrier and DCI corresponding to downlink data on an FDD downlink carrier are transmitted on the same sub-frame according to an example embodiment of the disclosure. As shown in Fig. 3, the DCI corresponding to the downlink data on the FDD uplink carrier and the DCI corresponding to the downlink data on the FDD downlink carrier are transmitted on the same sub-frame. The scenario further includes the following example embodiments.

### A first example embodiment

In the example embodiment, the size of the DCI corresponding to the downlink data on the FDD uplink carrier is configured in one of the following two manners:
manner 1: the size of the DCI format corresponding to the downlink data on the FDD uplink carrier is the same as the size of the DCI format corresponding to the downlink data on the FDD downlink carrier; and
manner 2: the size of the DCI format corresponding to the downlink data on the FDD uplink carrier is different from the size of the DCI format corresponding to the downlink data on the FDD downlink carrier.

For the manner 1, distinguishing between the DCI format corresponding to the downlink data on the FDD uplink carrier and the DCI format corresponding to the downlink data on the FDD downlink carrier is performed by configuring the carrier indication domain in the DCI format.

For the manner 1, distinguishing between the DCI format corresponding to the downlink data on the FDD uplink carrier and the DCI format corresponding to the downlink data on the FDD downlink carrier is performed by adding the format indication domain in the DCI format.

For the manner 1, an expression of the size of the DCI format corresponding to the downlink data on the FDD uplink carrier is the same as the size of the DCI format corresponding to the downlink data on the FDD downlink carrier refers to that:
if the number of information bits in the DCI format corresponding to the downlink data on the FDD uplink carrier is less than the number of information bits in the DCI format corresponding to the downlink data on the FDD downlink carrier, 0 is added in the DCI format corresponding to the downlink data on the FDD uplink carrier until the size of the DCI format corresponding to the downlink data on the FDD uplink carrier is the same as the size of the DCI format corresponding to the downlink data on the FDD downlink carrier; if the number of information bits in the DCI format corresponding to the downlink data on the FDD uplink carrier is greater than the number of information bits in the DCI format corresponding to the downlink data on the FDD downlink carrier, 0 is added in the DCI format corresponding to the downlink data on the FDD downlink carrier until the size of the DCI format corresponding to the downlink data on the FDD downlink carrier is the same as the size of the DCI format corresponding to the downlink data on the FDD uplink carrier. The DCI format corresponding to the downlink data on the FDD uplink carrier and the DCI format corresponding to the downlink data on the FDD downlink carrier are in the same search space.

For the manner 2, because the size of the DCI format corresponding to the downlink data on the FDD uplink carrier is different from the size of the DCI format corresponding to the downlink data on the FDD downlink carrier, the terminal distinguishes through blind detection. The DCI format corresponding to the downlink data on the FDD uplink carrier and the DCI format corresponding to the downlink data on the FDD downlink carrier are in either the same search space or different search spaces. The different search spaces are the search spaces which are respectively defined by using the continuous mode or the maximum interval mode.

### A second example embodiment

In the example embodiment, the downlink data on the FDD uplink carrier is transmitted in form of PUSCH and the corresponding transmission mode is multi-antenna transmission. The corresponding DCI format is DCI format Y, and the DCI format corresponding to the downlink data on the FDD downlink carrier is DCI format 2B.

In an example implementation process, the size of the DCI format Y corresponding to the downlink data on the FDD uplink carrier is configured in one of the following two manners:
manner 1: the size of the DCI format Y corresponding to the downlink data on the FDD uplink carrier is the same as the size of the DCI format 2B corresponding to the downlink data on the FDD downlink carrier; and
manner 2: the size of the DCI format Y corresponding to the downlink data on the FDD uplink carrier is different from the size of the DCI format 2B corresponding to the downlink data on the FDD downlink carrier.

For the manner 1, distinguishing between the DCI format Y corresponding to the downlink data on the FDD uplink carrier and the DCI format 2B corresponding to the downlink data on the FDD downlink carrier is performed by configuring the carrier indication control domain in the DCI format Y.

For the manner 1, distinguishing betweendistinguishing between the DCI format Y corresponding to the downlink data on the FDD uplink carrier and the DCI format 2B corresponding to the downlink data on the FDD downlink carrier is performed by adding the format indication domain in the DCI format Y, in which the length of the format indication domain is 1 bit. When the bit is 1, the format indication domain is used for indicating the DCI format Y, and when the bit is 0, the format indication domain is used for indicating the DCI format 2B. Or, when the bit is 1, the format indication domain is used for indicating the DCI format 2B, and when the bit is 0, the format indication domain is used for indicating the DCI format Y.

For the manner 1, an expression of the size of the DCI format Y is the same as the size of the DCI format 2B refers to that:
if the number of information bits in the DCI format Y is less than that in the DCI format 2B, 0 is added in the DCI format Y until the size of the DCI format Y is the same as the size of the DCI format 2B; if the number of information bits in the DCI format Y is greater than that in the DCI format 2B, 0 is added in the DCI format 2B until the size of the DCI format 2B is the same as the size of the DCI format Y. The DCI format 4 and the DCI format 2B are in the same search space.

For the manner 2, because the size of the DCI format 2B is different from the size of the DCI format Y, the terminal distinguishes through blind detection. The DCI format 2B and the DCI format Y is in either the same search space or different search spaces. The different search spaces are the search spaces which are respectively defined by using the continuous mode or the maximum interval mode.

### A third example embodiment

As shown in Fig. 3, the terminal detects the DCI format Y on the sub-frame #0, and then determines that the FDD uplink carrier sub-frame #0 is the downlink sub-frame according to the DCI format Y and the existing scheduling or HARQ timing.

### Scenario 3

Fig. 4 is a schematic diagram that DCI corresponding to downlink data on an FDD uplink carrier, DCI corresponding to downlink data on an FDD downlink spectrum and DCI corresponding to uplink data on an FDD uplink carrier are transmitted on the same sub-frame according to an example embodiment of the disclosure. As shown in Fig. 4, the DCI corresponding to the downlink data on the FDD uplink carrier, the DCI corresponding to the downlink data on the FDD downlink spectrum, and the DCI corresponding to the uplink data on the FDD uplink spectrum are transmitted on the same sub-frame. The scenario further includes the following example embodiments.

### A first example embodiment

In the example embodiment, the size of the DCI corresponding to the downlink data on the FDD uplink carrier is configured in one of the following two manners:
manner 1: the size of the DCI format corresponding to the downlink data on the FDD uplink carrier is the same as the size of the DCI format corresponding to the downlink data on the FDD downlink carrier and the size of the DCI format corresponding to the uplink data on the FDD uplink carrier;
manner 2: the size of the DCI format corresponding to the downlink data on the FDD uplink carrier is different from the size of the DCI format corresponding to the downlink data on the FDD downlink carrier or the size of the DCI format corresponding to the uplink data on the FDD uplink carrier.

For the manner 1, distinguishing among the size of the DCI format corresponding to the downlink data on the FDD uplink carrier, the size of the DCI format corresponding to the downlink data on the FDD downlink carrier and the size of the DCI format corresponding to the uplink data on the FDD uplink carrier is performed by configuring the carrier indication domain in the DCI format.

For the manner 1, distinguishing among the size of the DCI format corresponding to the downlink data on the FDD uplink carrier, the size of the DCI format corresponding to the downlink data on the FDD downlink carrier and the size of the DCI format corresponding to the uplink data on the FDD uplink carrier is performed by adding the format indication domain in the DCI format.

For the manner 1, an expression of the size of the DCI format corresponding to the downlink data on the FDD uplink carrier being the same as the size of the DCI format corresponding to the downlink data on the FDD downlink carrier and the size of the DCI format corresponding to the uplink data on the FDD uplink carrier refers to that:
the maximum value of the number of information bits in the DCI format corresponding to the downlink data on the FDD uplink carrier, the number of information bits in the DCI format corresponding to the uplink data on the FDD uplink carrier and the number of information bits in the DCI format corresponding to the downlink data on the FDD downlink carrier is determined. If the number of information bits in the DCI format corresponding to the downlink data on the FDD uplink carrier is less than the maximum value, 0 is added in the DCI format corresponding to the downlink data on the FDD uplink carrier until the size of the DCI format corresponding to the downlink data on the FDD uplink carrier is equal to the maximum value. The DCI format corresponding to the downlink data on the FDD uplink carrier, the DCI format corresponding to the downlink data on the FDD downlink carrier and the DCI format corresponding to the uplink data on the FDD uplink carrier are in the same search space.

For the manner 2, because the size of the DCI format corresponding to the downlink data on the FDD uplink carrier is different from the size of the DCI format corresponding to the downlink data on the FDD downlink carrier or the size of the DCI format corresponding to the uplink data on the FDD uplink carrier, the terminal distinguishes through blind detection. The DCI format corresponding to the downlink data on the FDD uplink carrier, the DCI format corresponding to the downlink data on the FDD downlink carrier and the DCI format corresponding to the uplink data on the FDD uplink carrier are in either the same search space or different search spaces. The different search spaces are search spaces which are respectively defined by using the continuous mode or the maximum interval mode.

### A second example embodiment

In the example embodiment, the downlink data on the FDD uplink carrier is transmitted in form of PUSCH and the corresponding DCI format is DCI format X. The DCI format corresponding to the downlink data on the FDD downlink carrier is the DCI format 1A, and the DCI format corresponding to the uplink data on the FDD uplink carrier is the DCI format 0.

In an example implementation process, the size of the DCI format X corresponding to the downlink data on the FDD uplink carrier is configured in one of the following two manners:
manner 1: the size of the DCI format X is the same as the size of the DCI format 0 and the DCI format 1A; and
manner 2: the size of the DCI format X is different from the size of the DCI format 0 and the DCI format 1A.

For the manner 1, distinguishing between the size of the DCI format X and the size of the DCI format 0 and the DCI format 1A is performed by configuring the carrier indication control domain in the DCI format X.

For the manner 1, distinguishing between the size of the DCI format X and the size of the DCI format 0 and the DCI format 1A is performed by adding the format indication domain in the DCI format X, in which the length of the format indication domain is 1 bit. When the bit is 1, the format indication domain is used for indicating the DCI format X, and when the bit is 0, the format indication domain is used for indicating the DCI format 1A/0. Or, when the bit is 1, the format indication domain is used for indicating the DCI format 1A/0, and when the bit is 0, the format indication domain is used for indicating the DCI format X.

For the manner 1, an expression of the size of the DCI format Y is the same as the size of the DCI format 1A and the DCI format 0 refers to that:
the maximum value of the number of information bits in the DCI format Y, the number of information bits in the DCI format 1A and the number of information bits in the DCI format 0 is determined. If the number of information bits in the DCI format Y is less than the maximum value, 0 is added in the DCI format Y until the size of the DCI format Y is equal to the maximum value. The DCI format Y, the DCI format 1A and the DCI format 0 are in the same search space.

For the manner 2, because the size of the DCI format Y is different from the size of the DCI format 0/1A, the terminal distinguishes through blind detection. The DCI format Y and the DCI format 0/1A are in either the same search space or different search spaces. The different search spaces are search spaces which are respectively defined by using the continuous mode or the maximum interval mode.

### A third example embodiment

As shown in Fig. 4, the terminal detects the DCI format X and the DCI format 0 on the sub-frame #0, and then determines that the FDD uplink carrier sub-frame #0 is the downlink sub-frame according to the DCI format X and the existing scheduling or HARQ timing, and determines that the FDD uplink carrier sub-frame #4 is the uplink sub-frame according to the DCI format 0 and the existing scheduling or HARQ timing.

### Scenario 4

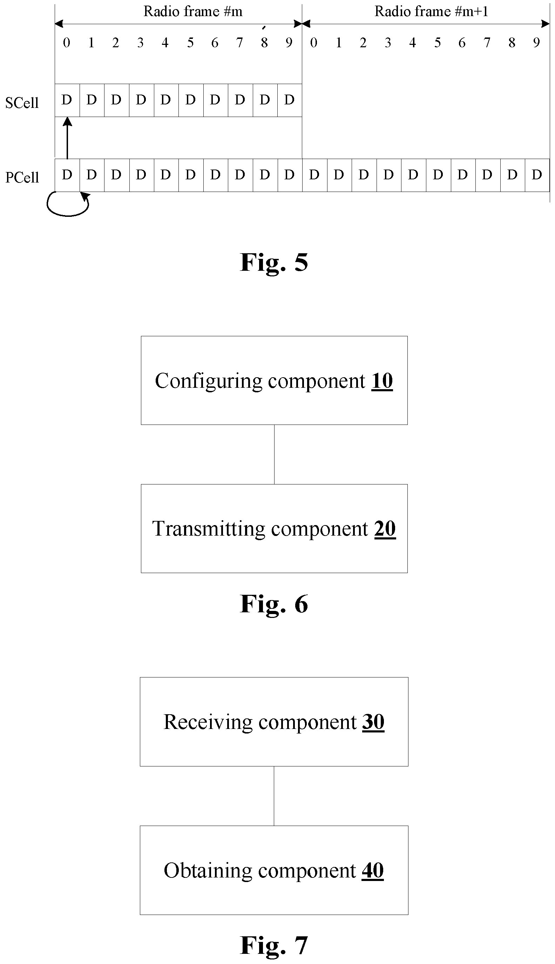

Fig. 5 is a schematic diagram of configuring DCI of SCell downlink data according to an example embodiment of the disclosure. As shown in Fig. 5, the PCell is the carrier on the authorized spectrum, and the SCell is the carrier on the unauthorized spectrum. The scenario further includes the following example embodiments.

### A first example embodiment

In the example embodiment, the size of the DCI corresponding to the downlink data on the SCell is configured in one of the following two manners:
manner 1: the size of the DCI format corresponding to the downlink data on the SCell is the same as the size of the DCI format corresponding to the downlink data on the PCell; and
manner 2: the size of the DCI format corresponding to the downlink data on the SCell is different from the size of the DCI format corresponding to the downlink data on the PCell.

The DCI format corresponding to the downlink data on the SCell and the DCI format corresponding to the downlink data on the PCell are in the same search space.

For the manner 1, distinguishing between the DCI format corresponding to the downlink data on the SCell and the DCI format corresponding to the downlink data on the PCell is performed by configuring the carrier indication domain in the DCI format.

For the manner 1, distinguishing between the DCI format corresponding to the downlink data on the SCell and the DCI format corresponding to the downlink data on the PCell is performed by adding the format indication domain in the DCI format.

For the manner 1, an expression of the size of the DCI format corresponding to the downlink data on the SCell being the same as the size of the DCI format corresponding to the downlink data on the PCell refers to that:
if the number of information bits in the DCI format corresponding to the downlink data on the SCell is less than the number of information bits in the DCI format corresponding to the downlink data on the PCell, 0 is added in the DCI format corresponding to the downlink data on the SCell until the size of the DCI format corresponding to the downlink data on the SCell is the same as the size of the DCI format corresponding to the downlink data on the PCell; if the number of information bits in the DCI format corresponding to the downlink data on the SCell is greater than the number of information bits in the DCI format corresponding to the downlink data on the PCell, 0 is added in the DCI format corresponding to the downlink data on the PCell until the size of the DCI format corresponding to the downlink data on the PCell is the same as the size of the DCI format corresponding to the downlink data on the SCell.

For the manner 2, because the size of the DCI format corresponding to the downlink data on the SCell is different from the size of the DCI format corresponding to the downlink data on the PCell, the DCI format corresponding to the downlink data on the SCell and the DCI format corresponding to the downlink data on the PCell are in either the same search space or different search spaces. The different search spaces are the search spaces which are respectively defined by using the continuous mode or the maximum interval mode.

### A second example embodiment

As shown in Fig. 5, the terminal detects the DCI format corresponding to the downlink data on the SCell on the PCell sub-frame #0, and then determines that the SCell sub-frame #0 is the downlink sub-frame according to the DCI format Y and the existing scheduling or HARQ timing.

Fig. 6 is a structural block diagram of a device for transmitting downlink data according to an embodiment of the disclosure. As shown in Fig. 6, the device for transmitting downlink data includes: a configuring component 10 to configure Downlink Control Information (DCI) corresponding to downlink data on a first carrier in a preset manner, wherein the preset manner is one of the followings: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier; when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier;; and a transmitting component 20 to transmit the downlink data on the first carrier according to the DCI corresponding to the downlink data on the first carrier.

By using the device shown in Fig. 6, the problem that if the downlink data needs to be transmitted on the FDD uplink carrier, the manner of configuring the DCI corresponding to the downlink data cannot be determined is solved, and then the DCI corresponding to the downlink data on the FDD uplink carrier is effectively configured in flexible duplex, complexity of the terminal is not increased, and performance of the DCI is ensured.

In an example implementation process, the downlink data on the first carrier is transmitted by using the structure of PUSCH or the structure of PDSCH.

In an example implementation process, the first carrier is the FDD uplink carrier or the carrier on the unauthorized spectrum in CA.

In an example implementation process, the second carrier is the FDD downlink carrier corresponding to the FDD uplink carrier or the carrier on the authorized spectrum in CA.

In one embodiment, the configuring component 10 is further configured to, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, distinguish, according to the DCI corresponding to the downlink data on the first carrier, between the DCI corresponding to the downlink data on the first carrier and the DCI corresponding to the uplink data on the first carrier, or between the DCI corresponding to the downlink data on the first carrier and the DCI corresponding to the downlink data on the second carrier.

In an example implementation process, distinguishing according to the DCI corresponding to the downlink data on the first carrier is distinguishing according to at least one of the following: at least one existing control domain in the DCI corresponding to the downlink data on the first carrier and at least one control domain newly-added in the DCI corresponding to the downlink data on the first carrier.

In an example implementation process, distinguishing according to the control domain newly-added in the DCI corresponding to the downlink data on the first carrier is at least adding the following control domains: a carrier indication domain and a format indication domain.

In one embodiment, at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier refers to that when at least one of a number of information bits in a DCI format corresponding to the downlink data on the first carrier is less than a number of information bits in a DCI format corresponding to the uplink data on the first carrier and the number of information bits in a DCI format corresponding to the downlink data on the first carrier is less than a number of information bits in a DCI format corresponding to the downlink data on the second carrier, adding 0 in the DCI format corresponding to the downlink data on the first carrier until at least one of the number of information bits in the DCI format corresponding to the downlink data on the first carrier is the same as the number of information bits in the DCI format corresponding to the uplink data on the first carrier and the number of information bits in the DCI format corresponding to the downlink data on the first carrier is the same as the number of information bits in the DCI format corresponding to the downlink data on the second carrier.

In one embodiment, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

In one embodiment, when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in different search spaces. The different search spaces refer to search spaces which are respectively defined by using a continuous mode or a maximum interval mode.

Fig. 7 is a structural block diagram of a device for acquiring downlink data according to an embodiment of the disclosure. As shown in Fig. 7, the device for acquiring downlink data includes: a receiving component 30 to receive the DCI from a base station, wherein the DCI is configured by the base station for the downlink data on the first carrier in the preset manner, and the preset manner is one of the followings: when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier;
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier; and an obtaining component 40 to obtain the downlink data on the first carrier according to the DCI corresponding to the downlink data on the first carrier.

In another embodiment, the embodiment of the disclosure also provides data transmission software, which is used for performing the technical solutions described in above embodiments and example embodiments.

In another embodiment, the embodiment of the disclosure also provides a storage medium, in which the software is stored; the storage medium includes, but is not limited to, a compact disc, a floppy disc, a hard disk and an erasable memory.

It is seen from the above description that the above embodiments achieve the following technical effects (note that, these effects is achieved by some example embodiments): by adopting the technical solution provided in the embodiments of the disclosure, the DCI corresponding to the downlink data on the FDD uplink carrier is effectively configured in flexible duplex without increasing a number of blind detections of the terminal decoding the PDCCH, so complexity of the terminal is not increased; besides, redundant bit information is not increased, so performance of the DCI is ensured.

Obviously, those skilled in the art should appreciate that the above components and steps of the disclosure is implemented by a general-purpose computing device, and they is centralized in a single computing device or distributed on a network composed of multiple computing devices. Optionally, they is implemented by a program code which is capable of being executed by the computing device, so that they is stored in a storage device and executed by the computing device. And in some situations, the presented or described steps is executed in an order different from that described here; or they are made into integrated circuit components, respectively; or multiple components and steps of them are made into a single integrated circuit component to realize. In this way, the disclosure is not limited to any particular combination of hardware and software.

The above are the example embodiments of the disclosure and not intended to limit the disclosure; for those skilled in the art, the disclosure may have various modifications and changes. Any modifications, equivalent replacements, improvements and the like as claimed in the claims of the disclosure shall fall within the scope of protection of the disclosure.

### Industrial Applicability

As mentioned above, the method and device for transmitting downlink data, and a device for acquiring downlink data provided in the disclosure have the following beneficial effects: the DCI corresponding to the downlink data on the FDD uplink carrier is effectively configured in flexible duplex without increasing the number of blind detections of the terminal decoding the PDCCH, so complexity of the terminal is not increased; besides, redundant bit information is not increased, so performance of the DCI is ensured.

## Claims

1. A method for transmitting downlink data, comprising:
configuring Downlink Control Information (DCI) corresponding to downlink data on a first carrier in a preset manner, wherein the preset manner is one of the followings:
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier;
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier;
transmitting the downlink data on the first carrier according to the DCI corresponding to the downlink data on the first carrier.

2. The method as claimed in claim 1, wherein when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, distinguishing, according to the DCI corresponding to the downlink data on the first carrier, between the DCI corresponding to the downlink data on the first carrier and the DCI corresponding to the uplink data on the first carrier, or between the DCI corresponding to the downlink data on the first carrier and the DCI corresponding to the downlink data on the second carrier.

3. The method as claimed in claim 2, wherein distinguishing according to the DCI corresponding to the downlink data on the first carrier is distinguishing according to at least one of the following: at least one existing control domain in the DCI corresponding to the downlink data on the first carrier and at least one control domain newly-added in the DCI corresponding to the downlink data on the first carrier.

4. The method as claimed in claim 3, wherein distinguishing according to the control domain newly-added in the DCI corresponding to the downlink data on the first carrier is at least adding the following control domains: a carrier indication domain and a format indication domain.

5. The method as claimed in claim 1, wherein at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier refers to that when at least one of a number of information bits in a DCI format corresponding to the downlink data on the first carrier is less than a number of information bits in a DCI format corresponding to the uplink data on the first carrier and the number of information bits in a DCI format corresponding to the downlink data on the first carrier is less than a number of information bits in a DCI format corresponding to the downlink data on the second carrier, adding 0 in the DCI format corresponding to the downlink data on the first carrier until at least one of the number of information bits in the DCI format corresponding to the downlink data on the first carrier is the same as the number of information bits in the DCI format corresponding to the uplink data on the first carrier and the number of information bits in the DCI format corresponding to the downlink data on the first carrier is the same as the number of information bits in the DCI format corresponding to the downlink data on the second carrier.

6. The method as claimed in claim 1, wherein when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

7. The method as claimed in claim 1, wherein when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

8. The method as claimed in claim 2, wherein when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in different search spaces.

9. The method as claimed in claim 8, wherein the different search spaces refer to search spaces which are respectively defined by using a continuous mode or a maximum interval mode.

10. The method as claimed in any one of claims 1 to 9, wherein the downlink data on the first carrier is transmitted by using a structure of Physical Uplink Shared Channel (PUSCH) or a structure of Physical Downlink Shared Channel (PDSCH).

11. The method as claimed in any one of claims 1 to 9, wherein the first carrier is a Frequency Division Duplex (FDD) uplink carrier or a carrier on an unauthorized spectrum in Carrier Aggregation (CA).

12. The method as claimed in any one of claims 1 to 9, wherein the second carrier is an FDD downlink carrier corresponding to a FDD uplink carrier or a carrier on an authorized spectrum in CA.

13. A device for transmitting downlink data, comprising:
a configuring component to configure Downlink Control Information (DCI) corresponding to downlink data on a first carrier in a preset manner, wherein the preset manner is one of the followings:
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier;
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier;
a transmitting component to transmit the downlink data on the first carrier according to the DCI corresponding to the downlink data on the first carrier.

14. The device as claimed in claim 13, wherein the configuring component is further configured to, when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, distinguish, according to the DCI corresponding to the downlink data on the first carrier, between the DCI corresponding to the downlink data on the first carrier and the DCI corresponding to the uplink data on the first carrier, or between the DCI corresponding to the downlink data on the first carrier and the DCI corresponding to the downlink data on the second carrier.

15. The device as claimed in claim 14, wherein distinguishing according to the DCI corresponding to the downlink data on the first carrier is distinguishing according to at least one of the following: at least one existing control domain in the DCI corresponding to the downlink data on the first carrier and at least one control domain newly-added in the DCI corresponding to the downlink data on the first carrier.

16. The device as claimed in claim 15, wherein distinguishing according to the control domain newly-added in the DCI corresponding to the downlink data on the first carrier is at least adding the following control domains: a carrier indication domain and a format indication domain.

17. The device as claimed in claim 13, wherein at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier refers to that when at least one of a number of information bits in a DCI format corresponding to the downlink data on the first carrier is less than a number of information bits in a DCI format corresponding to the uplink data on the first carrier and the number of information bits in a DCI format corresponding to the downlink data on the first carrier is less than a number of information bits in a DCI format corresponding to the downlink data on the second carrier, adding 0 in the DCI format corresponding to the downlink data on the first carrier until at least one of the number of information bits in the DCI format corresponding to the downlink data on the first carrier is the same as the number of information bits in the DCI format corresponding to the uplink data on the first carrier and the number of information bits in the DCI format corresponding to the downlink data on the first carrier is the same as the number of information bits in the DCI format corresponding to the downlink data on the second carrier.

18. The device as claimed in claim 13, wherein when at least one of the size of the DCI corresponding to the downlink data on the first carrier is the same as the size of the DCI corresponding to the uplink data on the first carrier and the size of the DCI corresponding to the downlink data on the first carrier is the same as the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

19. The device as claimed in claim 13, wherein when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in the same search space.

20. The device as claimed in claim 13, wherein when at least one of the size of the DCI corresponding to the downlink data on the first carrier is different from the size of the DCI corresponding to the uplink data on the first carrier and the size of the DCI corresponding to the downlink data on the first carrier is different from the size of the DCI corresponding to the downlink data on the second carrier, the DCI corresponding to the downlink data on the first carrier and at least one of the DCI corresponding to the downlink data on the second carrier and the DCI corresponding to the uplink data on the first carrier are in different search spaces.

21. The device as claimed in claim 20, wherein the different search spaces refer to search spaces which are respectively defined by using a continuous mode or a maximum interval mode.

22. The device as claimed in any one claims 13 to 21, wherein the downlink data on the first carrier is transmitted by using a structure of Physical Uplink Shared Channel (PUSCH) or a structure of Physical Downlink Shared Channel (PDSCH).

23. The device as claimed in any one claims 13 to 21, wherein the first carrier is a Frequency Division Duplex (FDD) uplink carrier or a carrier on an unauthorized spectrum in Carrier Aggregation (CA).

24. The device as claimed in any one claims 13 to 21, wherein the second carrier is an FDD downlink carrier corresponding to the FDD uplink carrier or a carrier on an authorized spectrum in CA.

25. A device for acquiring downlink data, comprising:
a receiving component to receive Downlink Control Information (DCI) from a base station, wherein the DCI is configured by the base station for downlink data on a first carrier in a preset manner, and the preset manner is one of the followings:
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is the same as a size of the DCI corresponding to the uplink data on the first carrier and the size of the DCI corresponding to the downlink data on the first carrier is the same as a size of the DCI corresponding to the downlink data on the second carrier;
when at least one of the DCI corresponding to the downlink data on the first carrier is transmitted with DCI corresponding to uplink data on the first carrier on the same sub-frame, and the DCI corresponding to the downlink data on the first carrier is transmitted with DCI corresponding to downlink data on a second carrier on the same sub-frame, at least some of a size of the DCI corresponding to the downlink data on the first carrier is different from a size of the DCI corresponding to the uplink data on the first carrier and the size of the DCI corresponding to the downlink data on the first carrier is different from a size of the DCI corresponding to the downlink data on the second carrier;
an obtaining component to obtain the downlink data on the first carrier according to the DCI corresponding to the downlink data on the first carrier.
